# EUROPEAN PATENT SPECIFICATION

(11) **EP 3 255 266 B1**
(45) Date of publication and mention of the grant of the patent: **12.12.2018**
(21) Application number: 17174145.7
(22) Date of filing: 02.06.2017
(51) Int. Cl.: F02C 6/16, F02C 7/14, F02C 3/14, F02C 3/04, F01D 15/10

(54) **HYBRID COMPRESSED AIR ENERGY STORAGE SYSTEM AND PROCESS**
HYBRID-DRUCKLUFTENERGIESPEICHERSYSTEM UND VERFAHREN
SYSTÈME ET PROCÉDÉ DE STOCKAGE D'ÉNERGIE D'AIR COMPRIMÉ HYBRIDE

(30) Priority: 07.06.2016 US 201662346587 P; 23.05.2017 US 201715602179
(43) Date of publication of application: 13.12.2017
(73) Proprietor: Dresser Rand Company, Olean, NY 14760 (US)
(72) Inventor: Williams, Joseph T., Kirkland, WA Washington 98034 (US); Kerth, Jason M., Houston, TX Texas 77079 (US)
(74) Representative: Isarpatent

(56) References cited:
- WO-A2-2011/059557
- US-A- 4 523 432
- US-A1- 2011 094 229
- US-A1- 2011 094 236

## Description

### Background

Compressed air energy storage (CAES) systems store excess power from an electrical grid during periods of excess electricity and generate electricity to upload to the electrical grid during high demand periods. The CAES systems produce stored energy by compressing and storing a gas during the periods of excess electricity and generate electricity by expanding the stored compressed gas during the high demand periods.

An adiabatic CAES system and a diabatic CAES system are two types of CAES systems used to stored and regenerate energy. The adiabatic CAES system stores thermal energy produced as the heat of compression when compressing and storing the gas. Thereafter, the adiabatic CAES system heats the stored compressed gas with the stored thermal energy before expanding the stored compressed gas to generate electricity. For example US 2011/094229 A1 describes an adiabatic compressed air energy storage system that includes a drive shaft, a motor-generator coupled to the drive shaft, a compressor coupled to the drive shaft and configured to output compressed air to a cavern, and a turbine coupled to the drive shaft and configured to receive air from the cavern. The system includes a first thermal energy storage (TES) device, a combustor configured to combust a flammable substance and generate an exhaust stream to the turbine, and controller. The controller is configured to control flow of the air to heat the air as it passes through the first TES, cause the flammable substance to flow to the combustor, operate the combustor to combust the air with the flammable substance to generate an exhaust stream into the turbine, and control the motor-generator to generate electrical energy from energy imparted thereto from the turbine via the drive shaft. Documents US 4,523,432 and US 2011/0094236 A1 describe further compressed air energy storage systems. Conversely, the diabatic CAES system rejects the heat of compression energy into the environment outside of the system, thus essentially wasting the energy used to perform the work of compression. Therefore, the diabatic CAES system typically heats the stored compressed gas by burning a fuel prior to expanding the stored compressed gas to generate electricity.

Both adiabatic and diabatic CAES systems may have shortcomings due to design and cost constraints. The adiabatic CAES system typically produces lower output power due to the reduced average temperature during the expansion/generation phase, resulting in a higher cost per kW produced. The adiabatic CAES system has added expenses when recovering electricity due to the loss of compression heat and subsequent cost of reheating the stored air. Both adiabatic and diabatic CAES systems typically discharge exhaust gas into the ambient atmosphere at above ambient temperatures (e.g., greater than 70°F), resulting in the loss of thermal energy. Increases in such thermal energy losses correlate to greater system inefficiencies.

There is a need, therefore, for improved CAES systems and methods that provide greater efficiencies and reduced cost to store and recover energy.

### Summary

The present invention relates to a hybrid compressed air energy storage system according to claim 1.

The present invention further relates to a method, according to claim 14, for storing and recovering energy by a hybrid compressed air energy storage system.

### Brief Description of the Drawings

The present disclosure is best understood from the following detailed description when read with the accompanying Figures. It is emphasized that, in accordance with the standard practice in the industry, various features are not drawn to scale. In fact, the dimensions of the various features may be arbitrarily increased or reduced for clarity of discussion.
Figure 1 depicts a schematic diagram of an illustrative hybrid CAES system, according to one or more embodiments.
Figure 2 depicts a schematic diagram of another illustrative hybrid CAES system, according to one or more embodiments.
Figure 3 depicts a schematic diagram of another illustrative hybrid CAES system, according to one or more embodiments.
Figure 4 depicts a flow chart of an illustrative method for storing and recovering energy with a hybrid CAES system, according to one or more embodiments.

### Detailed Description

It is to be understood that the following disclosure describes several exemplary embodiments for implementing different features, structures, or functions of the invention. Exemplary embodiments of components, arrangements, and configurations are described below to simplify the present disclosure; however, these exemplary embodiments are provided merely as examples and are not intended to limit the scope of the invention.

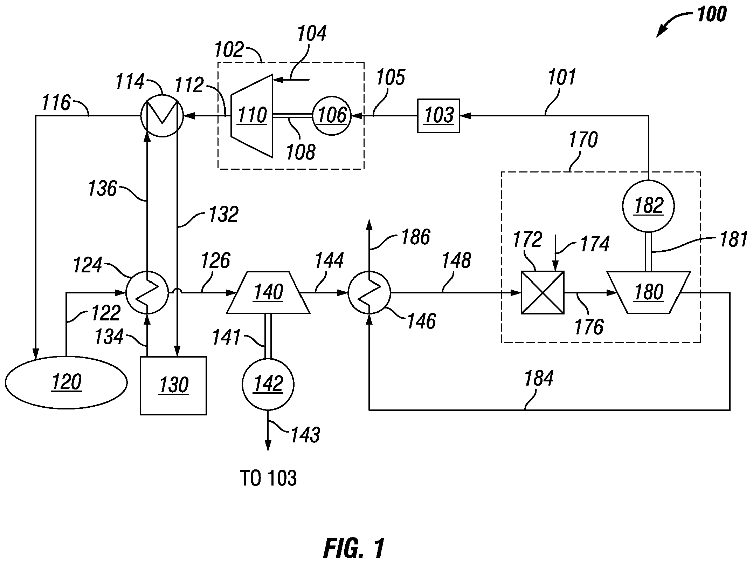

Figure 1 depicts a schematic diagram of a hybrid compressed air energy storage (CAES) system 100, according to one or more embodiments. The hybrid CAES system 100 may be a hybrid adiabatic-diabatic CAES system that may have aspects of an adiabatic CAES system and a diabatic CAES system. The hybrid CAES system 100 may include one or more compressor units 102. Each compressor unit 102 may include one or more drivers 106 and one or more compressors 110. The driver 106 may power or drive the compressor 110 and may be coupled to the compressor 110 by one or more driveshafts 108. The compressor unit 102 may receive and compress a process gas, such as air, via line 104 and may discharge a compressed process gas, such as compressed air, via line 112 during generation periods. The process gas may be or include one or more working fluids or refrigerants. For example, an illustrative process gas may be or include, but is not limited to, air, nitrogen, oxygen, argon, carbon dioxide, methane, ethane, propane, or any mixture thereof. In one or more examples, the compressor 110 may receive and compress ambient air via line 104 and may discharge compressed air via line 112. The driver 106 may be or include, but is not limited to, one or more electric motors, one or more turbines or expanders, or a combination thereof. The compressor 110 may be or include, but is not limited to, one or more of a supersonic compressor, a centrifugal compressor, an axial flow compressor, a reciprocating compressor, a rotary screw compressor, a rotary vane compressor, a scroll compressor, or a diaphragm compressor. Additionally, the compressor 110 may include a single compressor stage or multiple compressor stages. Embodiments of the compressor 110 that include multiple compressor stages may include one or more heat exchangers (not shown) that extract thermal energy (*e.g.,* heat of compression) from the compressed air between the compressor stages.

Although one compressor unit 102 containing one driver 106 and one compressor 110 are depicted in Figure 1, any number of the compressor units 102 containing one or more drivers 106 and one or more compressors 110 may be used in a compressor train, not shown, in the hybrid CAES system 100. For example, the hybrid CAES system 100 may include, but is not limited to, 2, 3, 4, 5, 6, 7, 8, or more compressor units 102 containing one or more drivers 106 and one or more compressors 110.

In one or more embodiments, not shown, the hybrid CAES system 100 may include a first driver that may drive a first compressor, a second driver that may drive a second compressor, a third driver that may drive a third compressor, and a fourth driver that may drive a fourth compressor. In some examples, each pair of the driver 106 and the compressor 110 may be disposed together in a hermetically sealed casing (not shown). For example, the compressor units 102 containing one or more drivers 106 and one or more compressors 110 may be a DATUM® centrifugal compressor unit, commercially available from Dresser-Rand of Houston, Texas. In another example, one or more compressors 110 may be or include a DATUM-S® supersonic compressor manufactured by Dresser-Rand of Houston, TX.

One or more heat exchangers 114 may receive the compressed air via line 112 discharged by the compressor 110. The heat exchanger 114 may extract thermal energy (*e.g.,* heat of compression) from the compressed air and may discharge a cooled compressed air via line 116. One or more air storage units 120 may receive the cooled compressed air via line 116 from the heat exchanger 114. The cooled compressed air may be stored or otherwise maintained with the air storage unit 120 as a stored compressed air. In some examples, the cooled compressed air via line 116 may be continuously flowed or otherwise transferred into the air storage unit 120 and maintained as the stored compressed air. In other examples, the cooled compressed air via line 116 may be intermittently flowed or otherwise transferred at different times into the air storage unit 120. Therefore, the stored compressed air maintained within the air storage unit 120 may be or include air from one batch or multiple batches.

During storage periods, one or more compressor units 102 (*e.g.,* the compressor train) may compress air and/or one or more other process gases, and the compressed air or process gas may be introduced to and stored in the air storage unit 120. In some examples, the air storage unit 120 may be one or more caverns or one or more vessels. The air storage unit 120 may be or include, but is not limited to, one or more of: a rock cavern, a salt cavern, an aquifer, an abandoned mine, a depleted gas or oil field, a well, a container, tank, or vessel stored under water or the ground, a container, tank, or vessel stored on or above the ground.

One or more thermal storage devices 130 may receive and store the thermal energy via line 132 extracted by the heat exchanger 114 during storage periods. A heat transfer medium containing the thermal energy may be flowed or otherwise transferred from the heat exchanger 114 to the thermal storage device 130. The heat transfer medium containing the thermal energy may be maintained in the thermal storage device 130 until used during generation periods. Alternatively, the thermal energy may be transferred from the heat transfer medium to a thermal mass contained within the thermal storage device 130.

In some examples, not shown, if the hybrid CAES system 100 includes a compressor train, one or more additional heat exchangers 114 may be disposed between each stage or compressor unit 102 containing one or more drivers 106 and one or more compressors 110. Each additional heat exchanger 114 may be disposed downstream of each compressor 110 and may the cooled compressed air or other process gas to the air storage unit 120 and may transfer extracted thermal energy to the thermal storage device 130. For example, the hybrid CAES system 100 may include (not shown) a first heat exchanger downstream of a first compressor driven by a first driver, a second heat exchanger downstream of a second compressor driven by a second driver, a third heat exchanger downstream of a third compressor driven by a third driver, and a fourth heat exchanger downstream of a fourth compressor driven by a fourth driver.

In one or more embodiments, during generation periods, one or more heat exchangers 124 may receive the stored thermal energy via line 134 from the thermal storage device 130 and may also receive the stored compressed air from the air storage unit 120 via line 122. The heat exchanger 124 may transfer the stored thermal energy from the heat transfer medium via line 134 to the stored compressed air via line 122 to produce and may discharge a heated compressed air via line 126 and a cooled heat transfer medium via line 136. The heat exchanger 124 may discharge the heated compressed air at a temperature of about 350°F (177°C), about 400°F (204°C), or about 500°F (260°C) to about 600°F (316°C), about 800°F (427°C), or about 1,000°F (534°C). In another embodiment, heat exchangers 114 and 124 may be replaced by a single heat exchanger (not shown). A plurality of flow control valves (not shown) may be configured to direct the flow of the compressed air discharged by the compressor 110, the heat transfer medium, and the stored compressed air through the single heat exchanger.

The cooled heat transfer medium may be stored in a storage vessel (not shown) and/or may be transferred to the heat exchanger 114 via line 136. The heat transfer medium may be circulated in a thermal cycle between the heat exchanger 114, the thermal storage device 130, and the heat exchanger 124. Each of the heat exchangers 114, 124, as well as any other heat exchanger described and discussed herein, may be or include, but is not limited to, one or more of: a coil system, a shell-and-tube system, a direct contact system, or another type of heat transfer system.

The heat transfer medium may flow through the heat exchanger 114 and absorb thermal energy from the air or other process gas. Thus, the heat transfer medium has a greater temperature when exiting the heat exchanger 114 than when entering the heat exchanger 114; therefore, the heat transfer medium is heated within the heat exchanger 114 by the compressed air or other process gas via line 112. Also, the cooled compressed air or process gas via line 116 has a lower temperature when exiting the heat exchanger 114 than the compressed air via line 112 entering the heat exchanger 114; therefore, the compressed air is cooled within the heat exchanger 114 by the heat transfer medium via line 136.

Heat transfer mediums may be or include one or more working fluids or refrigerants and/or one or more liquid coolants. Illustrative heat transfer mediums may be or include, but are not limited to, thermal oil, water, steam, carbon dioxide, methane, ethane, propane, butane, other alkanes, ethylene glycol, propylene glycol, other glycol ethers, other organic solvents or fluids, one or more hydrofluorocarbons, one or more chlorofluorocarbons, or any combination thereof. One or more thermal masses contained within the thermal storage device 130 may store the extracted thermal energy and may release the stored thermal energy. The thermal mass may be in a solid state, a molten state, a liquid state, a fluid state, a superfluid state, a gaseous state, or any combination thereof. Illustrative thermal masses may be or include, but are not limited to, water, earth, mud, rocks, stones, concrete, metals, salts, or any combination thereof. In some examples, the thermal storage device 130 may be or include the thermal mass disposed within an insulated vessel or other container.

In other embodiments, not shown, during generation periods, the stored compressed air from the air storage unit 120 may be transferred to the thermal storage device 130. The stored compressed air may be heated by the thermal mass contained within the thermal storage device 130. The stored thermal energy in the thermal mass may be transferred to the stored compressed air to produce the heated compressed air. The stored thermal energy may be transferred to the stored compressed air by direct contact, or indirect contact (*e.g.,* a heat exchanger), with the thermal mass.

During generation periods, the stored compressed air from the air storage unit 120 via line 122 may be drawn from the air storage unit 120, heated by the heat exchanger 124 to produce the heated compressed air via line 126, and used to power one or more expanders 140. The expander 140 may receive the heated compressed air discharged from the heat exchanger 124. In one or more examples, the expander 140 may be or include a very high pressure (VHP) expander. The expander 140 may expand the heated compressed air and may discharge an expanded air via line 144. The expanded air may have a temperature of about 70°F (21°C), about 100°F (38°C), about 150°F (66°C), or about 200°F (93°C) to about 250°F (121°C), about 300°F (149°C), or about 350°F (177°C) and may be at a pressure of about 400 psia (2.76 MPa), about 450 psia (3.10 MPa), about 500 psia (3.45 MPa), or about 550 psia (3.79 MPa) to about 600 psia (4.14 MPa), about 650 psia (4.48 MPa), about 700 psia (4.83 MPa), about 750 psia (5.17 MPa), or about 800 psia (5.52 MPa). In some examples, the thermal energy transferred from the thermal storage device 130 may be the only thermal energy used to heat or otherwise increase the temperature of the heated compressed air expanded by the expander 140.

The expander 140 may generate or otherwise produce power due to the expansion of the heated compressed air. In one or more examples, the expander 140 may produce electricity by powering one or more electrical generators 142 coupled thereto by one or more driveshafts 141. The electrical generator 142 may generate electricity and upload or otherwise transfer the generated electricity to an electrical grid 103 via line 143 during generation periods. The electrical generator 142 may generate a power of about 1 MW, about 4 MW, or about 7 MW to about 15 MW, about 18 MW, about 20 MW, about 23 MW, about 25 MW, about 27 MW, about 30 MW, or greater. In one or more examples, at least a portion of the generated electricity may be transferred from the electrical grid 103 via line 105 to one or more drivers 106, as shown, or may be transferred directly from the electrical generator 142 to one or more drivers 106 or other electrical devices, not shown. In other examples, not shown, the expander 140 may be coupled to and power or otherwise drive one or more pumps, one or more compressors, and/or pieces of other process equipment.

One or more recuperators 146 may receive the expander air via line 144, heat the expanded air, and discharge a heated expanded air via line 148. The recuperator 146 may also receive an expanded exhaust gas via line 184, cool the expanded exhaust gas, and discharge a cooled exhaust gas via line 186. For example, the cooled exhaust gas may be vented or otherwise released into the ambient atmosphere. The thermal energy in the expanded exhaust gas via line 184 may be transferred by the recuperator 146 to the expanded air via line 144 to produce the heated expanded air via line 148. The recuperator 146 may discharge the heated expanded air via line 148 at a temperature of about 350°F (177°C) to about 500°F (260°C), about 600°F (316°C), about 650°F (343°C), about 700°F (371°C), about 800°F (427°C), about 900°F (482°C), about 1,000°F (534°C), or greater.

Although not shown, the recuperator 146 may include a cooling portion and a heating portion. The recuperator 146 may transfer thermal energy from the cooling portion to the heating portion. More specifically, the recuperator 146 may transfer thermal energy from heated fluids or gases contained in the cooling portion to other fluids or gases contained in the heating portion. The recuperator 146 may be configured to transfer thermal energy from the expanded exhaust gas to the heated expanded air. For example, the cooling portion of the recuperator 146 may receive the expanded exhaust gas via line 184 and discharge the cooled exhaust gas via line 186, and the heating portion of the recuperator 146 may receive the first expanded air via line 144 and may discharge the heated expanded air via line 148.

In one or more embodiments, the expander 140 may be or include a VHP expander fluidly coupled to and disposed between the heat exchanger 124 and the recuperator 146, such as, for example, downstream of the heat exchanger 124 and upstream of the recuperator 146. The VHP expander 140 may be used to maximize the amount of thermal energy (heat of compression) that is recovered as electricity by the electrical generator 142 and may be used to minimize the temperature of the expanded air discharged from the expander 140. The less thermal energy contained in the expanded air introduced into the recuperator 146 via line 144, the more thermal energy may be transferred from the expanded exhaust gas in line 184 to the heated expanded air in line 148 by the recuperator 146. By maximizing the thermal energy transfer from the expanded exhaust gas via line 144 by the recuperator 146, less thermal energy may be lost or otherwise discharged with the cooled exhaust gas via line 186 outside of the hybrid CAES system 100. In some examples, the temperature of the expanded air via line 144 may be increased by greater than 100°F (38°C), greater than 150°F (66°C), greater than 200°F (93°C), greater than 250°F (121°C), greater than 300°F (149°C), greater than 350°F (177°C), greater than 400°F (204°C), greater than 450°F (232°C), or greater than 500°F (260°C) to produce the heated expanded air via line 148 by transferring thermal energy from the expanded exhaust gas via line 184 by the recuperator 146 to the expanded air via line 144.

The hybrid CAES system 100 may include one or more power generation units 170. Each of the power generation units 170 may include one or more combustors 172, one or more expanders 180, and one or more electrical generators 182. In one or more examples, the combustor 172 may be or include one or more low pressure (LP) combustors and the expander 180 may be or include one or more low pressure (LP) expanders. The heated expanded air via line 148 may be transferred to the combustor 172. One or more fuels, water, steam, one or more oxygen sources, additives, or any mixture thereof may be added or otherwise transferred to the combustor 172 via line 174 and combined with the heated expanded air in the combustor 172 to produce the fuel mixture. Alternatively, in another embodiment, the one or more fuels, water, steam, oxygen sources (*e.g.,* O₂), and/or additives may be combined and mixed with the heated expanded air within the line 148 to produce the fuel mixture upstream of the combustor 172 (not shown). The fuel mixture containing the heated expanded air may be combusted within the combustor 172 to produce an exhaust gas. Illustrative fuels may be or include, but are not limited to, one or more hydrocarbon fuels (*e.g.,* alkanes, alkenes, alkynes, or alcohols), hydrogen gas, syngas, or any combination thereof. Illustrative hydrocarbon fuels may be or include, but are not limited to, methane, ethane, acetylene, propane, butane, gasoline, kerosene, diesel, fuel oil, biodiesel, methanol, ethanol, or any mixture thereof.

Once the fuel mixture is combusted, the combustor 172 may discharge the exhaust gas via line 176 that is transferred to the expander 180. The expander 180 may receive and expand the exhaust gas via line 176 discharged by the combustor 172. The expander 180 may expand the exhaust gas to generate or otherwise produce power. In one or more examples, the expander 180 may produce electricity by powering or driving one or more electrical generators 182 coupled thereto by one or more driveshafts 181. The electrical generator 182 may generate electricity and upload or otherwise transfer the generated electricity to the electrical grid 103 via line 101 during generation periods. The electrical generator 182 may generate a power of less than about 10 MW, about 10 MW to about 50 MW, about 50 MW to about 150 MW, about 160 MW, about 165 MW, or about 168 MW to about 170 MW, about 175 MW, about 180 MW, or greater. In other examples, the expander 180 may be coupled to and power one or more pumps, one or more compressors, other rotary equipment, and/or other components that may be contained within the hybrid CAES system 100 or other systems (not shown).

The expander 180 may discharge an expanded exhaust gas via line 184. The expanded exhaust gas may have at a temperature of about 600°F (316°C), about 700°F (371°C), or about 750°F (399°C) to about 800°F (427°C), about 900°F (482°C), about 1,000°F (534°C), or about 1,200°F (649°C). The recuperator 146 may receive and cool the expanded exhaust gas via line 184 and may discharge the cooled exhaust gas via line 186. For example, the cooled exhaust gas may be discharged into the ambient atmosphere or transferred to other components contained within the hybrid CAES system 100 or other systems (not shown). The cooled exhaust gas may have a temperature of about 80°F (27°C), about 100°F (38°C) to about 200°F (93°C), about 212°F (100°C), about 250°F (121°C), about 300°F (149°C), or about 350°F (177°C) to less than 400°F (204°C), less than 500°F (260°C), or less than 550°F (288°C).

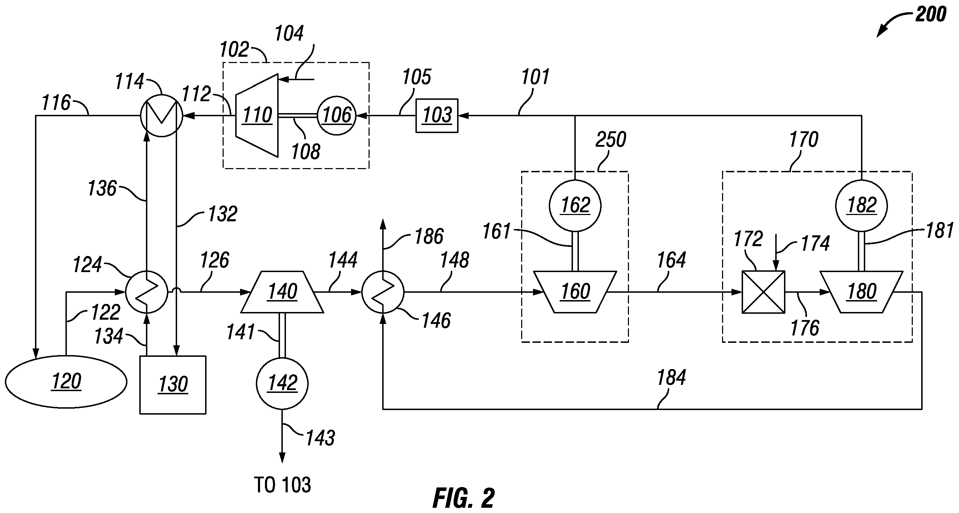

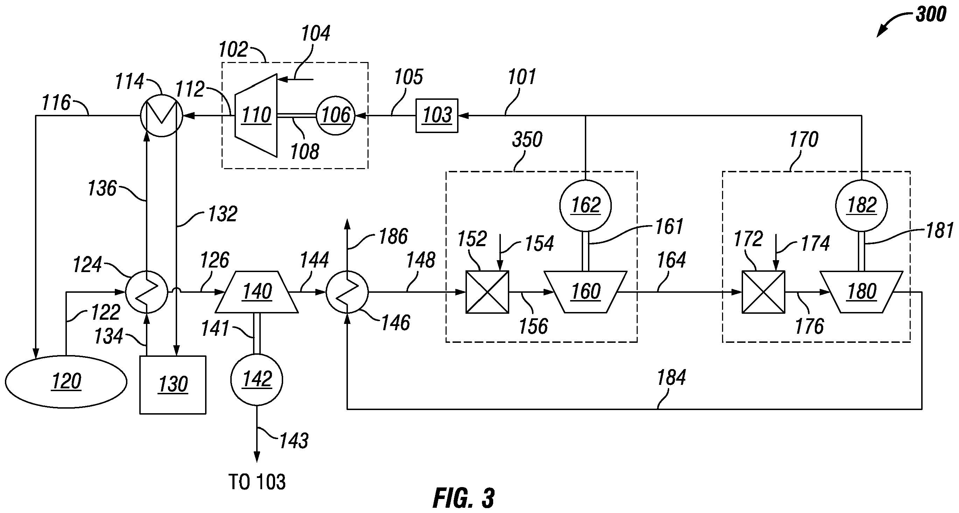

Figure 2 depicts a schematic diagram of an illustrative hybrid CAES system 200 that may include one or more power generation units 250 fluidly coupled to and disposed between the recuperator 146 and the power generation unit 170, such as, for example, downstream of the recuperator 146 and upstream of the power generation unit 170. Figure 3 depicts a schematic diagram of an illustrative hybrid CAES system 300 that may include one or more power generation units 350 disposed downstream of the recuperator 146 and upstream of the power generation unit 170. Each hybrid CAES system 200, 300 may be a hybrid adiabatic-diabatic CAES system that may have aspects of an adiabatic CAES system and a diabatic CAES system. The hybrid CAES systems 200, 300 or portions thereof depicted in Figures 2 and 3, respectively, and the hybrid CAES system 100 or portions thereof depicted Figure 1 share many common components. It should be noted that like numerals shown in the Figures and discussed herein represent like components throughout the multiple embodiments disclosed herein.

Each of the power generation units 250, 350 may include one or more expanders 160 and one or more electrical generators 162, as depicted in Figures 2 and 3. The expander 160 may be or include one or more high pressure (HP) expanders. The power generation unit 350, depicted in Figure 3, may also include one or more combustors 152 fluidly coupled to and disposed between the recuperator 146 and the expander 160, such as, for example, downstream of the recuperator 146 and upstream of the expander 160. The combustor 152 may be or include, but is not limited to, an external duct burner or a direct fired burner. In one or more embodiments, as depicted in Figure 2, the expander 160 may receive via line 148 one or more heated expanded process gases, such as heated expanded air, discharged by the recuperator 146. The expander 160 may expand the heated expanded process gas or air to generate or otherwise produce power and may discharge one or more expanded process gases, such as expanded air, via line 164.

In one or more examples, the expander 160 may produce electricity by powering or driving one or more electrical generators 162 coupled thereto by one or more driveshafts 161. The electrical generator 162 may generate electricity and upload or otherwise transfer the generated electricity to the electrical grid 103 via line 101 during generation periods. The electrical generator 162 may generate a power of less than about 8 MW, about 8 MW, about 10 MW, about 14 MW, or about 18 MW to about 20 MW, about 25 MW, about 30 MW, about 32 MW, about 35 MW, or greater. In other examples, the expander 160 may be coupled to and power one or more pumps, one or more compressors, other rotary equipment, and/or other components that may be contained within the hybrid CAES systems 200, 300 or other systems (not shown).

In other embodiments, as depicted in Figure 3, the combustor 152 may receive one or more heated expanded process gases, such as heated expanded air, via line 148 discharged by the recuperator 146. The combustor 152 may discharge an exhaust gas that may be received by the expander 160 via line 156. The expander 160 may expand the exhaust gas or other expanded process gas to generate or otherwise produce power and may discharge one or more expanded exhaust gases via line 164.

In one or more examples, the combustor 152 may be or include one or more high pressure (HP) combustors and the expander 160 may be or include one or more HP expanders. The heated expanded air may be transferred to the combustor 152 via line 148. One or more fuels, water, steam, one or more oxygen sources, additives, or any mixture thereof may be added or otherwise transferred to the combustor 152 via line 154 and combined with the heated expanded air in the combustor 152 to produce the fuel mixture. Alternatively, in another embodiment, the one or more fuels, water, steam, oxygen sources (*e.g.,* O₂), and/or additives may be combined and mixed with the heated expanded air within the line 148 to produce the fuel mixture upstream of the combustor 152 (not shown). The fuel mixture containing the heated expanded air may be combusted within the combustor 152 to produce an exhaust gas. Illustrative fuels may be or include, but are not limited to, one or more hydrocarbon fuels (*e.g.,* alkanes, alkenes, alkynes, or alcohols), hydrogen gas, syngas, or any combination thereof. Illustrative hydrocarbon fuels may be or include, but are not limited to, methane, ethane, acetylene, propane, butane, gasoline, kerosene, diesel, fuel oil, biodiesel, methanol, ethanol, or any mixture thereof.

Once the fuel mixture is combusted, the combustor 152 may discharge the exhaust gas that is transferred to the expander 160 via line 156. The expanded process gas may be transferred to the one or more combustors 172 via line 164 and combusted as discussed and described above. The expanded process gas may be or include, but is not limited to, air, exhaust gas, working fluid, or any mixture thereof. In one or more examples, the expanded process gas may be or include expanded air and may be discharged from the power generation unit 250 via line 164. In other examples, the expanded process gas may be or include expanded exhaust gas and may be discharged from the power generation unit 350 via line 164.

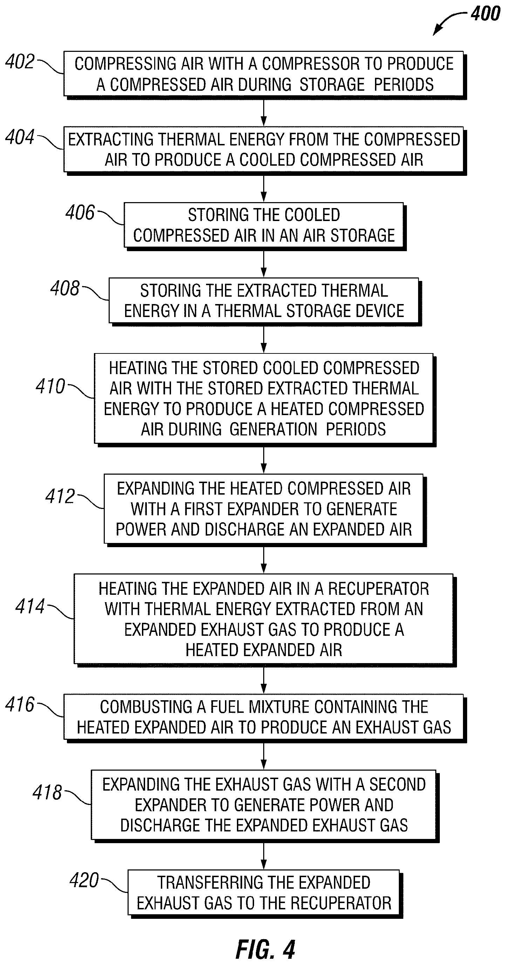

Figure 4 depicts a flow chart of illustrative method 400 for storing and recovering energy with a hybrid CAES system, according to one or more embodiments. In some embodiments, the method 400 may be conducted on the hybrid CAES system 100, 200, and 300. The method 400 may include compressing air or process gas with one or more compressors to produce a compressed air or process gas during one or more storage periods, as shown at 402, and extracting thermal energy from the compressed air or process gas to produce a cooled compressed air or process gas, as shown at 404. The one or more compressors producing the compressed air or process gas may be powered by electricity transferred from an electrical grid during the one or more storage periods.

The method 400 may also include storing the cooled compressed air or process gas in one or more air storages, as shown at 406, and storing the extracted thermal energy in one or more thermal storage devices, as shown at 408. The method 400 may further include heating the stored cooled compressed air or process gas with the stored extracted thermal energy to produce a heated compressed air or process gas during one or more generation periods, as shown at 410. The method 400 may also include expanding the heated compressed air or process gas with one or more first expanders to generate power and discharge an expanded air or process gas, as shown at 412. The method 400 may further include heating the expanded air or process gas with one or more recuperators to produce a heated expanded air or process gas, as shown at 414. The expanded air or process gas may be heated by thermal energy extracted from one or more expanded exhaust gases that may be passing through the one or more recuperators. The method 400 may include combusting a fuel mixture containing the heated expanded air or process gas to produce an exhaust gas, as shown at 416.

The method 400 may also include expanding the exhaust gas with one or more second expanders to generate power and discharge the expanded exhaust gas, as shown at 418, and transferring the expanded exhaust gas to the one or more recuperators, as shown at 420. The expanded exhaust gases may be cooled in the recuperator to produce a cooled exhaust gas that may be vented into the ambient environment. The first expander may be coupled to one or more first electrical generators and the second expander may be coupled to one or more second electrical generators. The power generated by each of the first and second expanders may be used to produce electricity with the first and second electrical generators, respectively. Each of the first electrical generator, the second electrical generator, and one or more additional electrical generators may independently be coupled to the electrical grid and may upload or otherwise transfer the produced electricity to the electrical grid during the one or more generation periods.

The foregoing has outlined features of several embodiments so that those skilled in the art may better understand the present disclosure. Those skilled in the art should appreciate that they may readily use the present disclosure as a basis for designing or modifying other processes and structures for carrying out the same purposes and/or achieving the same advantages of the embodiments introduced herein. The scope of the invention is defined in the appended claims.

## Claims

1. A hybrid compressed air energy storage system (100), comprising:
a compressor (110) for receiving and compressing air and discharging a compressed air;
a first heat exchanger (114) for receiving the compressed air discharged by the compressor (110), extracting thermal energy from the compressed air, and discharging a cooled compressed air;
an air storage unit (120) for receiving and storing the cooled compressed air discharged by the first heat exchanger and discharging a stored compressed air;
a thermal storage device (130) for receiving and storing the thermal energy extracted by the first heat exchanger (114);
a second heat exchanger (124) for transferring thermal energy stored by the thermal storage device (130) to the stored compressed air discharged by the air storage unit (120) and discharging a heated compressed air;
a first expander (140) for receiving and expanding the heated compressed air discharged by the second heat exchanger (124), producing power, and discharging an expanded air;
a recuperator (146) for receiveing and heating the expanded air from the first expander (140) and discharging a heated expanded air, and wherein the recuperator (140) is configured to receive and cool an expanded exhaust gas and discharge a cooled exhaust gas;
a first combustor (172) for receiving the heated expanded air and discharging an exhaust gas; and
a second expander (180) for receiving and expanding the exhaust gas discharged by the first combustor (172), producing power, and discharging the expanded exhaust gas.

2. The system of claim 1, wherein the first expander (140) comprises a very high pressure expander coupled to a first electrical generator (142).

3. The system according to any of the preceding claims, wherein the second expander (180) comprises a low pressure expander coupled to a second electrical generator (182), wherein the first combustor (172) in particular comprises a low pressure combustor.

4. The system according to any of the preceding claims, wherein the recuperator (146) is configured to remove thermal energy from the expanded exhaust gas to produce the cooled exhaust gas having a temperature of about 100°F (38°C) to less than 300°F (149°C).

5. The system according to any of the preceding claims, wherein the first combustor (172) is configured to combust a fuel mixture comprising the heated expanded air and a hydrocarbon fuel.

6. The system according to any of the preceding claims, wherein the first combustor (172) comprises a duct burner.

7. The system according to any of the preceding claims, further comprising a third expander (160) fluidly coupled between the recuperator (146) and the first combustor (172), wherein the third expander (160) is configured to receive and expand the heated expanded air from the recuperator (146).

8. The system of claim 7, wherein the third expander (160) comprises a high pressure expander coupled to a third electrical generator (162), and/or further comprising a second combustor (152) fluidly coupled between the recuperator (146) and the third expander.

9. The system according to any of the preceding claims, wherein the compressor (110) is coupled to a driver (106), the driver comprising an electric motor or a turbine.

10. The system according to any of the preceding claims, wherein the second heat exchanger (124) is configured to receive and heat the stored compressed air discharged by the air storage unit (120) and discharge the heated compressed air, and wherein the second heat exchanger (124) is configured to receive and cool a heated thermal transfer medium from the thermal storage device (130) and discharge a cooled thermal transfer medium.

11. The system according to any of the preceding claims, wherein the heated compressed air expanded by the first expander (140) is heated solely by the thermal energy transferred from the thermal storage device (130), and/or wherein the recuperator (146) comprises a cooling portion and a heating portion and is configured to transfer thermal energy from the cooling portion to the heating portion, wherein the cooling portion is configured to receive the expanded exhaust gas and discharge the cooled exhaust gas, and wherein the heating portion is configured to receive the first expanded air and discharge the heated expanded air.

12. The hybrid compressed air energy storage system of claim 1, wherein,
the first expander (140) is a very high pressure expander;
a further combustor (152) is a high pressure combustor and configured to combust a first fuel mixture comprising the heated expanded air, and discharge a first exhaust gas;
a further expander (160) is a high pressure expander configured to receive and expand the first exhaust gas discharged by the high pressure combustor, produce power, and discharge a first expanded exhaust gas;
the first combustor (172) is a low pressure combustor configured to receive the first expanded exhaust gas, combust a second fuel mixture comprising the first expanded exhaust gas, and discharge a second exhaust gas; and
the second expander (180) is a low pressure expander configured to receive and expand the second exhaust gas discharged by the low pressure combustor, produce power, and discharge a second expanded exhaust gas, and wherein the recuperator (146) is further configured to receive and cool the second expanded exhaust gas and discharge a cooled exhaust gas.

13. The hybrid compressed air energy storage system of claim 12, wherein at least one of the high pressure combustor and the low pressure combustor comprises a duct burner.

14. A method (400) for storing and recovering energy by a hybrid compressed air energy storage system (100), comprising:
compressing (402) air with a compressor (110) to produce a compressed air during an storage period;
extracting (404) thermal energy from the compressed air to produce a cooled compressed air;
storing (406) the cooled compressed air in an air storage unit (120);
storing (408) the extracted thermal energy in a thermal storage device (130);
heating (410) the stored cooled compressed air with the stored extracted thermal energy to produce a heated compressed air during a generation period;
expanding (412) the heated compressed air with a first expander (140) to generate power and discharge an expanded air;
heating (414) the expanded air with a recuperator (146) to produce a heated expanded air, wherein the expanded air is heated by thermal energy extracted from an expanded exhaust gas;
combusting (416) a fuel mixture comprising the heated expanded air to produce an exhaust gas;
expanding (418) the exhaust gas with a second expander (180) to generate power and discharge the expanded exhaust gas; and
transferring (420) the expanded exhaust gas to the recuperator (146).

15. The method of claim 14, wherein:
the heated compressed air is discharged from the second heat exchanger (124) at a temperature of about 400°F (204°C) to about 800°F (427°C), and/or
the cooled exhaust gas is discharged from the recuperator (146) at a temperature of about 100°F (38°C) to less than 300°F (149°C), and/or
the heated compressed air expanded by the first expander (140) is heated solely by the thermal energy transferred from the thermal storage device (130).

## Patentansprüche

1. Hybrid-Druckluftenergiespeichersystem (100), umfassend:
einen Verdichter (110) zum Empfangen und Verdichten von Luft und Abführen einer Druckluft;
einen ersten Wärmetauscher (114) zum Empfangen der durch den Verdichter (110) abgeführten Druckluft, Extrahieren von Wärmeenergie aus der Druckluft und Abführen einer gekühlten Druckluft;
eine Luftspeichereinheit (120) zum Empfangen und Speichern der durch den ersten Wärmetauscher abgeführten gekühlten Druckluft und Abführen einer gespeicherten Druckluft;
eine Wärmespeichervorrichtung (130) zum Empfangen und Speichern der durch den ersten Wärmetauscher (114) extrahierten Wärmeenergie;
einen zweiten Wärmetauscher (124) zum Übertragen von durch die Wärmespeichervorrichtung (130) gespeicherter Wärmeenergie an die durch die Luftspeichereinheit (120) abgeführte gespeicherte Druckluft und Abführen einer erwärmten Druckluft;
einen ersten Expander (140) zum Empfangen und Expandieren der durch den zweiten Wärmetauscher (124) abgeführten erwärmten Druckluft, Erzeugen von Energie und Abführen einer expandierten Luft;
einen Rekuperator (146) zum Empfangen und Erwärmen der expandierten Luft vom ersten Expander (140) und Abführen einer erwärmten expandierten Luft, und wobei der Rekuperator (140) dazu gestaltet ist, ein expandiertes Abgas zu empfangen und zu kühlen und ein gekühltes Abgas abzuleiten;
einen ersten Verbrenner (172) zum Empfangen der erwärmten expandierten Luft und Abführen eines Abgases und
einen zweiten Expander (180) zum Empfangen und Expandieren des durch den ersten Verbrenner (172) abgeführten Abgases, Erzeugen von Energie und Abführen des expandierten Abgases.

2. System nach Anspruch 1, wobei der erste Expander (140) einen mit einem ersten elektrischen Generator (142) gekoppelten Höchstdruckexpander umfasst.

3. System nach einem der vorangehenden Ansprüche, wobei der zweite Expander (180) einen mit einem zweiten elektrischen Generator (182) gekoppelten Niederdruckexpander umfasst, wobei der erste Verbrenner (172) insbesondere einen Niederdruckverbrenner umfasst.

4. System nach einem der vorangehenden Ansprüche, wobei der Rekuperator (146) dazu gestaltet ist, dem expandierten Abgas Wärmeenergie zu entziehen, um das gekühlte Abgas mit einer Temperatur von etwa 100 °F (38 °C) bis weniger als 300 °F (149 °C) zu erzeugen.

5. System nach einem der vorangehenden Ansprüche, wobei der erste Verbrenner (172) dazu gestaltet ist, ein Brennstoffgemisch, das die erwärmte expandierte Luft und einen Kohlenwasserstoffbrennstoff umfasst, zu verbrennen.

6. System nach einem der vorangehenden Ansprüche, wobei der erste Verbrenner (172) einen Kanalbrenner umfasst.

7. System nach einem der vorangehenden Ansprüche, ferner umfassend einen zwischen dem Rekuperator (146) und dem ersten Verbrenner (172) fluidgekoppelten dritten Expander (160), wobei der dritte Expander (160) dazu gestaltet ist, die erwärmte expandierte Luft vom Rekuperator (146) zu empfangen und zu expandieren.

8. System nach Anspruch 7, wobei der dritte Expander (160) einen mit einem dritten elektrischen Generator (162) gekoppelten Hochdruckexpander umfasst und/oder ferner einen zwischen dem Rekuperator (146) und dem dritten Expander fluidgekoppelten zweiten Verbrenner (152) umfasst.

9. System nach einem der vorangehenden Ansprüche, wobei der Verdichter (110) mit einem Antrieb (106) gekoppelt ist, wobei der Antrieb einen Elektromotor oder eine Turbine umfasst.

10. System nach einem der vorangehenden Ansprüche, wobei der zweite Wärmetauscher (124) dazu gestaltet ist, die durch die Luftspeichereinheit (120) abgeführte gespeicherte Druckluft zu empfangen und zu erwärmen und die erwärmte Druckluft abzuleiten, und wobei der zweite Wärmetauscher (124) dazu gestaltet ist, ein erwärmtes Wärmeübertragungsmedium von der Wärmespeichervorrichtung (130) zu empfangen und zu kühlen und ein gekühltes Wärmeübertragungsmedium abzuleiten.

11. System nach einem der vorangehenden Ansprüche, wobei die durch den ersten Expander (140) expandierte erwärmte Druckluft allein durch die von der Wärmespeichervorrichtung (130) übertragene Wärmeenergie erwärmt wird und/oder wobei der Rekuperator (146) einen Kühlabschnitt und einen Erwärmungsabschnitt umfasst und dazu gestaltet ist, Wärmeenergie vom Kühlabschnitt zum Erwärmungsabschnitt zu übertragen, wobei der Kühlabschnitt dazu gestaltet ist, das expandierte Abgas zu empfangen und das gekühlte Abgas abzuleiten, und wobei der Erwärmungsabschnitt dazu gestaltet ist, die erste expandierte Luft zu empfangen und die erwärmte expandierte Luft abzuleiten.

12. Hybrid-Druckluftenergiespeichersystem nach Anspruch 1, wobei
der erste Expander (140) ein Höchstdruckexpander ist; ein weiterer Verbrenner (152) ein Hochdruckverbrenner ist und dazu gestaltet ist, ein erstes Brennstoffgemisch, das die erwärmte expandierte Luft umfasst, zu verbrennen und ein erstes Abgas abzuleiten; ein weiterer Expander (160) ein Hochdruckexpander ist, der dazu gestaltet ist, das durch den Hochdruckverbrenner abgeführte erste Abgas zu empfangen und zu expandieren, Energie zu erzeugen und ein erstes expandiertes Abgas abzuleiten;
der erste Verbrenner (172) ein Niederdruckverbrenner ist, der dazu gestaltet ist, das erste expandierte Abgas zu empfangen, ein zweites Brennstoffgemisch, das das erste expandierte Abgas umfasst, zu verbrennen und ein zweites Abgas abzuleiten; und
der zweite Expander (180) ein Niederdruckexpander ist, der dazu gestaltet ist, das durch den Niederdruckverbrenner abgeführte zweite Abgas zu empfangen und zu expandieren, Energie zu erzeugen und ein zweites expandiertes Abgas abzuleiten, und wobei der Rekuperator (146) ferner dazu gestaltet ist, das zweite expandierte Abgas zu empfangen und zu kühlen und ein gekühltes Abgas abzuleiten.

13. Hybrid-Druckluftenergiespeichersystem nach Anspruch 12, wobei zumindest der Hochdruckverbrenner und/oder der Niederdruckverbrenner einen Kanalbrenner umfasst.

14. Verfahren (400) zum Speichern und Rückgewinnen von Energie durch ein Hybrid-Druckluftenergiespeichersystem (100), umfassend:
Verdichten (402) von Luft mit einem Verdichter (110), um während eines Speicherzeitraums eine Druckluft zu erzeugen;
Extrahieren (404) von Wärmeenergie aus der Druckluft, um eine gekühlte Druckluft zu erzeugen;
Speichern (406) der gekühlten Druckluft in einer Luftspeichereinheit (120);
Speichern (408) der extrahierten Wärmeenergie in einer Wärmespeichervorrichtung (130);
Erwärmen (410) der gespeicherten gekühlten Druckluft mit der gespeicherten extrahierten Wärmeenergie, um während eines Erzeugungszeitraums eine erwärmte Druckluft zu erzeugen;
Expandieren (412) der erwärmten Druckluft mit einem ersten Expander (140), um Energie zu erzeugen und eine expandierte Luft abzuleiten;
Erwärmen (414) der expandierten Luft mit einem Rekuperator (146), um eine erwärmte expandierte Luft zu erzeugen, wobei die expandierte Luft durch aus einem expandierten Abgas extrahierte Wärmeenergie erwärmt wird;
Verbrennen (416) eines Brennstoffgemischs, das die erwärmte expandierte Luft umfasst, um ein Abgas zu erzeugen;
Expandieren (418) des Abgases mit einem zweiten Expander (180), um Energie zu erzeugen und das expandierte Abgas abzuleiten, und
Übertragen (420) des expandierten Abgases an den Rekuperator (146).

15. Verfahren nach Anspruch 14, wobei:
die erwärmte Druckluft aus dem zweiten Wärmetauscher (124) mit einer Temperatur von etwa 400 °F (204 °C) bis etwa 800 °F (427 °C) abgeführt wird und/oder
das gekühlte Abgas aus dem Rekuperator (146) mit einer Temperatur von etwa 100 °F (38 °C) bis weniger als 300 °F (149 °C) abgeführt wird und/oder
die durch den ersten Expander (140) expandierte erwärmte Druckluft allein durch die von der Wärmespeichervorrichtung (130) übertragene Wärmeenergie erwärmt wird.

## Revendications

1. Système hybride de stockage d'énergie par air comprimé (100), comprenant :
un compresseur (110) servant à recevoir et à comprimer de l'air et à évacuer un air comprimé ;
un premier échangeur de chaleur (114) servant à recevoir l'air comprimé évacué par le compresseur (110), à extraire de l'énergie thermique de l'air comprimé, et à évacuer un air comprimé refroidi ;
une unité de stockage d'air (120) servant à recevoir et à stocker l'air comprimé refroidi évacué par le premier échangeur de chaleur et à évacuer un air comprimé stocké ;
un dispositif de stockage thermique (130) servant à recevoir et à stocker l'énergie thermique extraite par le premier échangeur de chaleur (114) ;
un deuxième échangeur de chaleur (124) servant à transférer de l'énergie thermique stockée par le dispositif de stockage thermique (130) à l'air comprimé stocké évacué par l'unité de stockage d'air (120) et à évacuer un air comprimé chauffé ;
un premier détendeur (140) servant à recevoir et à détendre l'air comprimé chauffé évacué par le deuxième échangeur de chaleur (124), à produire de la puissance, et à évacuer un air détendu ;
un récupérateur (146) servant à recevoir et à chauffer l'air détendu provenant du premier détendeur (140) et à évacuer un air détendu chauffé, et le récupérateur (140) étant conçu pour recevoir et refroidir un gaz d'échappement détendu et évacuer un gaz d'échappement refroidi ;
une première chambre de combustion (172) servant à recevoir l'air détendu chauffé et à évacuer un gaz d'échappement ; et
un deuxième détendeur (180) servant à recevoir et à détendre le gaz d'échappement évacué par la première chambre de combustion (172), à produire de la puissance, et à évacuer le gaz d'échappement détendu.

2. Système selon la revendication 1, dans lequel le premier détendeur (140) comprend un détendeur très haute pression accouplé à un premier générateur électrique (142).

3. Système selon l'une quelconque des revendications précédentes, dans lequel le deuxième détendeur (180) comprend un détendeur basse pression accouplé à un deuxième générateur électrique (182), dans lequel la première chambre de combustion (172) en particulier comprend une chambre de combustion basse pression.

4. Système selon l'une quelconque des revendications précédentes, dans lequel le récupérateur (146) est conçu pour retirer de l'énergie thermique du gaz d'échappement détendu pour produire le gaz d'échappement refroidi ayant une température d'environ 100 °F (38 °C) à moins de 300 °F (149 °C).

5. Système selon l'une quelconque des revendications précédentes, dans lequel la première chambre de combustion (172) est conçue pour brûler un mélange combustible comprenant l'air détendu chauffé et un combustible hydrocarboné.

6. Système selon l'une quelconque des revendications précédentes, dans lequel la première chambre de combustion (172) comprend un brûleur à veine d'air.

7. Système selon l'une quelconque des revendications précédentes, comprenant en outre un troisième détendeur (160) accouplé de manière fluidique entre le récupérateur (146) et la première chambre de combustion (172), dans lequel le troisième détendeur (160) est conçu pour recevoir et détendre l'air détendu chauffé provenant du récupérateur (146).

8. Système selon la revendication 7, dans lequel le troisième détendeur (160) comprend un détendeur haute pression accouplé à un troisième générateur électrique (162), et/ou comprenant en outre une deuxième chambre de combustion (152) accouplée de manière fluidique entre le récupérateur (146) et le troisième détendeur.

9. Système selon l'une quelconque des revendications précédentes, dans lequel le compresseur (110) est accouplé à un dispositif d'entraînement (106), le dispositif d'entraînement comprenant un moteur électrique ou une turbine.

10. Système selon l'une quelconque des revendications précédentes, dans lequel le deuxième échangeur de chaleur (124) est conçu pour recevoir et chauffer l'air comprimé stocké évacué par l'unité de stockage d'air (120) et évacuer l'air comprimé chauffé, et dans lequel le deuxième échangeur de chaleur (124) est conçu pour recevoir et refroidir un milieu de transfert thermique chauffé provenant du dispositif de stockage thermique (130) et évacuer un milieu de transfert thermique refroidi.

11. Système selon l'une quelconque des revendications précédentes, dans lequel l'air comprimé chauffé détendu par le premier détendeur (140) est chauffé uniquement par l'énergie thermique transférée à partir du dispositif de stockage thermique (130), et/ou dans lequel le récupérateur (146) comprend une partie de refroidissement et une partie de chauffage et est conçu pour transférer de l'énergie thermique de la partie de refroidissement à la partie de chauffage, dans lequel la partie de refroidissement est conçue pour recevoir le gaz d'échappement détendu et évacuer le gaz d'échappement refroidi, et dans lequel la partie de chauffage est conçue pour recevoir le premier air détendu et évacuer l'air détendu chauffé.

12. Système hybride de stockage d'énergie par air comprimé selon la revendication 1, dans lequel le premier détendeur (140) est un détendeur très haute pression ;
une chambre de combustion (152) supplémentaire est une chambre de combustion haute pression et est conçue pour brûler un premier mélange combustible comprenant l'air détendu chauffé, et évacuer un premier gaz d'échappement ;
un détendeur (160) supplémentaire est un détendeur haute pression conçu pour recevoir et détendre le premier gaz d'échappement évacué par la chambre de combustion haute pression, produire de la puissance, et évacuer un premier gaz d'échappement détendu ;
la première chambre de combustion (172) est une chambre de combustion basse pression conçue pour recevoir le premier gaz d'échappement détendu, brûler un deuxième mélange combustible comprenant le premier gaz d'échappement détendu, et évacuer un deuxième gaz d'échappement ; et
le deuxième détendeur (180) est un détendeur basse pression conçu pour recevoir et détendre le deuxième gaz d'échappement évacué par la chambre de combustion basse pression, produire de la puissance, et évacuer un deuxième gaz d'échappement détendu, et dans lequel le récupérateur (146) est en outre conçu pour recevoir et refroidir le deuxième gaz d'échappement détendu et évacuer un gaz d'échappement refroidi.

13. Système hybride de stockage d'énergie par air comprimé selon la revendication 12, dans lequel la chambre de combustion haute pression et/ou la chambre de combustion basse pression comprennent un brûleur à veine d'air.

14. Procédé (400) permettant de stocker et de récupérer de l'énergie au moyen d'un système hybride de stockage d'énergie par air comprimé (100), consistant à :
comprimer (402) de l'air à l'aide d'un compresseur (110) pour produire un air comprimé pendant une période de stockage ;
extraire (404) de l'énergie thermique de l'air comprimé pour produire un air comprimé refroidi ;
stocker (406) l'air comprimé refroidi dans une unité de stockage d'air (120) ;
stocker (408) l'énergie thermique extraite dans un dispositif de stockage thermique (130) ;
chauffer (410) l'air comprimé refroidi stocké à l'aide de l'énergie thermique extraite stockée pour produire un air comprimé chauffé pendant une période de génération ;
détendre (412) l'air comprimé chauffé à l'aide d'un premier détendeur (140) pour générer de la puissance et évacuer un air détendu ;
chauffer (414) l'air détendu à l'aide d'un récupérateur (146) pour produire un air détendu chauffé, dans lequel l'air détendu est chauffé par de l'énergie thermique extraite d'un gaz d'échappement détendu ;
brûler (416) un mélange combustible comprenant l'air détendu chauffé pour produire un gaz d'échappement ;
détendre (418) le gaz d'échappement à l'aide d'un deuxième détendeur (180) pour générer de la puissance et évacuer le gaz d'échappement détendu ; et
transférer (420) le gaz d'échappement détendu au récupérateur (146).

15. Procédé selon la revendication 14, dans lequel :
l'air comprimé chauffé est évacué du deuxième échangeur de chaleur (124) à une température d'environ 400 °F (204 °C) à environ 800 °F (427 °C), et/ou
le gaz d'échappement refroidi est évacué du récupérateur (146) a une température d'environ 100 °F (38 °C) à moins de 300 °F (149 °C), et/ou l'air comprimé chauffé détendu par le premier détendeur (140) est chauffé uniquement par l'énergie thermique transférée à partir du dispositif de stockage thermique (130).
